(19) Europäisches Patentamt
European Patent Office
Office européen des brevets

(11) **EP 3 828 634 B1**

(12) **EUROPEAN PATENT SPECIFICATION**

(45) Date of publication and mention
of the grant of the patent:
**08.01.2025 Bulletin 2025/02**

(21) Application number: **19841083.9**

(22) Date of filing: **23.07.2019**

(51) International Patent Classification (IPC):
*G03G 9/097* *(2006.01)*

(52) Cooperative Patent Classification (CPC):
**G03G 9/08782; C08K 5/101; C08K 5/103;
G03G 9/081; G03G 9/0825**

(86) International application number:
**PCT/JP2019/028916**

(87) International publication number:
**WO 2020/022351 (30.01.2020 Gazette 2020/05)**

(54) **WAX COMPOSITION AND TONER FOR ELECTROPHOTOGRAPHY**

WACHSZUSAMMENSETZUNG UND TONER FÜR DIE ELEKTROFOTOGRAFIE

COMPOSITION DE CIRE ET TONER POUR ÉLECTROPHOTOGRAPHIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.07.2018 JP 2018137991**

(43) Date of publication of application:
**02.06.2021 Bulletin 2021/22**

(73) Proprietors:
• **Boso Oil & Fat Co., Ltd.**
**Tokyo, 103-0021 (JP)**
• **Tomoegawa Corporation**
**Tokyo 104-8335 (JP)**

(72) Inventors:
• **KOIDE, Masumi**
**Funabashi-shi**
**Chiba 273-0015 (JP)**
• **KUMETA, Jun**
**Funabashi-shi**
**Chiba 273-0015 (JP)**
• **GOTO, Moriyuki**
**Shizuoka-shi**
**Shizuoka 424-0852 (JP)**
• **KIMURA, Yudai**
**Shizuoka-shi**
**Shizuoka 421-0192 (JP)**

(74) Representative: **Pfenning, Meinig & Partner mbB**
**Patent- und Rechtsanwälte**
**Joachimsthaler Straße 10-12**
**10719 Berlin (DE)**

(56) References cited:
**EP-A1- 2 415 459      JP-A- 2006 276 063
JP-A- 2008 156 245      JP-A- 2009 084 489
JP-A- 2012 047 914      JP-A- 2015 004 962
JP-A- 2016 145 857      JP-A- H0 341 465
JP-A- H0 641 570       JP-A- H05 320 560
JP-A- H07 188 590      JP-A- S4 992 235
JP-A- S59 171 691**

**Description**

BACKGROUND

1. TECHNICAL FIELD

The present invention relates to an electrophotographic toner containing a wax composition that can give low-temperature fixability to the toner and excellent dispersibility of a coloring agent contained in the toner.

2. RELATED ART

Toners used in electrophotographic apparatus, such as printer and facsimile for electrophotography and duplicating machine having these functions, contains coloring agent (carbon black, magnetic powder, pigment, etc.), charge controlling agent and wax in addition to thermoplastic resin (binder resin) as main component, and flowability improving agent, cleaning auxiliary agent and transfer auxiliary agent, if required.

The toner softens in a fixing step by being heated with a fixing roller and is fixed onto the surface of a printing medium to form an image by receiving pressure from the fixing roller. The wax for toner contained in the toner has two functions, one of which is an effect of improving fixing characteristics. This is an anchor effect which the wax that started oozing from low temperatures prevents low-temperature offset by maintaining strong adhesiveness to a recording sheet at low temperatures. The other function is a releasing agent effect which prevents high-temperature offset. The wax oozes at high temperatures to cover the fixing roller surface and enters in between the toner and the fixing roller to lower the adhesion force between the toner and the fixing roller.

In recent years, more advanced performance is required for electrophotographic apparatus such as printer, facsimile and duplicating machine. In addition to improvement of the apparatus, higher function is required for the toner used in these apparatus. Accordingly, coloring agent and wax having high dispersibility are being required for the toner in order to achieve high image quality. Also, ones with low fixing temperature for rapid start-up, reduced standby power, etc., excellent offset resistance and excellent fixing strength are desired.

Also, full-color images are generally formed by heat melting four kinds of toners, i.e. magenta, cyan, yellow and black, and transferring each of them onto a transfer member in multiple separate processes. The toner used here is required to have good fusibility and color mixing ability when being heated; therefore, low softening point and low melt viscosity are required. Especially, if the color toner contains the coloring agent in high concentration and has poor dispersibility, the viscosity of the melted toner increases and molten flowability decreases causing poor drum releasability and so-called offset characteristics degrade. Also, due to decrease in the molten flowability, the ability of color mixing by melting the overlapped toners degrades.

Also, coloring agent and wax having good dispersibility are demanded in order to obtain a color image close to the original since transparency becomes poor when the dispersibility of the coloring agent and the wax are poor.

Patent document 1 discloses a method for allowing a toner to exhibit low-temperature fixability which is a method using natural wax such as carnauba wax and rice wax as the releasing agent. Use of these waxes may allow a toner to exhibit low-temperature fixability but may exhibit insufficient offset resistance due to insufficient releasability. Furthermore, these natural waxes have poor coloring agent dispersibility and high-quality image was not obtained.

Patent document 2 describes a monoester having a specific complex viscosity. Despite the monoester wax having this complex viscosity showing excellent fixability, in case of color printing there may be problems such as color reproducibility and coloring agent dispersibility, since the obtained ester wax shows significant coloring due to use of sulfuric acid as a catalyst and performing a reaction at a high-temperature of 240°C on synthesis of the monoester wax.

Patent document 3 discloses a toner using a mixture of carnauba wax and apolar paraffin wax as the releasing agent.

According to this technique, it is assumed that a color toner having excellent fixability, glossiness, transparency and releasability can be provided without applying fixing oil to the fixing apparatus by using a mixture of carnauba wax and apolar paraffin wax as the releasing agent and a binder resin having acid value of 5 to 20 mg KOH/g and comprising cyclohexane dimethanol as an essential component of a polyhydric alcohol component.

However, apolar paraffin wax has a problem of being difficult to ensure excellent dispersibility even when the acid value of the resin is increased as described above.

As explained above, the wax composition for toner having excellent wax and coloring agent dispersibility was demanded in low temperature-fixable wax composition for toner. Also, a toner that does not aggregate under high temperature condition is demanded. That is, the wax composition for toner having improved heat storage stability was necessary.

# EP 3 828 634 B1

[Prior art document]

[Patent document]

[Patent document 1] Japanese Patent Application Publication No. H 4-362953
[Patent document 2] Japanese Patent Application Publication No. 2013-015673
[Patent document 3] Japanese Patent Application Publication No. 2004-287218 [0014A] Document EP 2 415 459 A1
describes a skin external preparation comprising a finely dispersed wax composition in which the wax is finely dispersed in a solid or semisolid form in an aqueous dispersion medium, which preparation is characterized in that the above finely dispersed wax composition contains a wax being solid or semisolid at ordinary temperature, a nonionic surfactant, an aqueous dispersion medium, and an ionic water-soluble thickener, optionally further contains silicone oil and/or fluorinated oil which is liquid at ordinary temperature, and the mass ratio of the nonionic surfactant to the wax being 1.0 or more, the particle size of the finely dispersed wax is 500 nm or less, and it substantially contains no ionic surfactants therein.

Document JP 2015 004962 A describes a wax composition for toner that is composed of a fatty acid ester A and fatty acid ester B and contains the fatty acid ester A and fatty acid ester B at a mass ratio of 2:1 to 1:2. The fatty acid ester A is an ester composed of a glycerol condensate and a linear saturated fatty acid having a carbon number of 16 to 24. The fatty acid ester B is an ester composed of a linear saturated alcohol having a carbon number of 16 to 24 and a linear saturated fatty acid having a carbon number of 16 to 24.

Document JP 2016 145857 A describes a toner which comprises a binder resin containing an amorphous polyester resin and a crystalline polyester resin, and a release agent, in which the amorphous polyester resin is obtained by polymerization condensation of a dicarboxylic acid monomer essentially comprising terephthalic acid or isophthalic acid with a diol monomer essentially comprising ethylene glycol. The crystalline polyester resin is obtained by polymerization condensation of a dicarboxylic acid monomer essentially comprising an aliphatic dicarboxylic acid having 9 to 22 carbon atoms with a diol monomer essentially comprising an aliphatic diol having 2 to 10 carbon atoms. The release agent is a synthetic ester wax having a hydroxyl value of less than 5 mgKOH/g.

[PROBLEMS TO BE SOLVED]

The present invention is intended for providing a wax composition for toner which may suitably give heat storage stability and low-temperature fixability to the toner and, furthermore which has excellent coloring agent dispersibility independent of chargeability of the resin.

[GENERAL DISCLOSURE]

The invention is defined in the appended claims.

As a result of exhaustive study to solve the above described problem, the present inventors have discovered that use of a composition constituted of a monoester wax (a) constituted of a straight-chain monocarboxylic acid and a straight-chain monoalcohol and a particular ester (b) as the wax for toner can improve the coloring agent dispersibility of the toner and give heat storage stability and low-temperature fixability to the toner.

[Effect of invention]

By mixing the wax composition with a toner, the coloring agent contained in the toner shows favorable dispersibility and low-temperature fixability and heat storage stability can be given to the toner.

DESCRIPTION OF EXEMPLARY EMBODIMENTS

Hereinafter, embodiment of the present invention is described.

The wax composition used in the present invention contains the wax (a) containing the monoester of straight-chain monocarboxylic acid and straight-chain monoalcohol and ester (b) of glycerin with the mixed carboxylic acid composed of straight-chain C12 to C24 monocarboxylic acid having one hydroxyl group and straight-chain C12 to C24 monocarboxylic acid. Hereinafter, each component is described.

[Wax (a)]

In the present invention, the wax (a) containing the monoester of straight-chain monocarboxylic acid and straight-chain monoalcohol has the hydroxyl value of 30 or lower. The hydroxyl value of the wax (a) originates not only from the hydroxyl group in the monoester, but from free alcohol, resin component, etc. Therefore, thermal stability of the wax (a) may degrade when the hydroxyl value exceeds 30 and image quality may degrade by decrease in chargeability. Also, compatibility of the wax (a) with the ester (b) decreases when the hydroxyl value exceeds 30, and the dispersibility decreases due to aggregation of the wax (a) alone even when the hydroxyl value of the wax composition is increased. Also, it is desirable that the monoester is a linear monoester of carbon number 42 or higher. It is necessary to use the linear monoester since, when carbon chain has a branched structure, the compatibility with the binder resin contained in the toner increases to decrease the fixing releasing effect. Furthermore, it is desirable that the wax (a) comprises a saturated linear monoester, as the monoester of straight-chain monocarboxylic acid and straight-chain monoalcohol. The wax is less prone to oxidization and thermal stability is improved by the saturation of monoester. The wax (a) may contain a linear unsaturated monoester in place of/in addition to saturated linear monoester.

The content of the linear monoester in the wax (a) is preferably 40 mass % or higher, more preferably 60 mass % or higher, and furthermore preferably 80 mass % or higher. As the content of the linear monoester increases, fixing releasability increases, and staining of sheet ejection opening due to adhesion of the releasing agent is reduced. The fixing releasability is low if the content of the linear monoester is lower than 40 mass % and the sheet ejection opening may be stained due to adhesion of the releasing agent. For example, the content of the linear monoester may be measured by gas chromatography.

Synthetic ester compound, natural ester wax, etc., may be given as an example of the linear monoester used in the present invention.

The synthetic ester compound may be obtained by esterification reaction of a linear higher alcohol with a linear higher carboxylic acid or a linear higher carboxylic acid halide.

The linear higher alcohol may include, for example, stearyl alcohol, aralkyl alcohol, behenyl alcohol, tetracosanol, hexacosanol, octacosanol, triacontanol, etc.

The linear higher carboxylic acid may include, for example, stearic acid, arachidic acid, behenic acid, lignoceric acid, cerotic acid, montanic acid, melissic acid, etc.

Method for production of synthetic ester compound includes a method by, for example, firstly, esterification reaction (condensation reaction) of alcohol using linear higher carboxylic acid excess to the linear higher alcohol component and removing excess linear higher carboxylic acid by deacidification using an aqueous alkali solution. In this reaction, catalyst may be used as needed. Also, it is better to perform the esterification reaction along with distilling away the water in the system since the reaction is an equilibrium reaction accompanying dehydration. The reaction is performed at a high temperature level at which water in the system can be distilled away although the reaction raw material does not escape from the system.

Natural ester wax may be obtained by separation and purification of wax extracted from animals and plants.

Examples thereof include candelilla wax, carnauba wax, rice wax, Japan wax, jojoba oil, beeswax, lanolin wax, montan wax, sunflower wax, etc. However, since natural ester wax is a mixture of many kinds of compounds, separation and purification are sometimes necessary for usage. Among these, rice wax and sunflower wax are preferable since the content of monoester of saturated straight-chain C20 to C24 fatty acid and saturated straight-chain C22 to C38 alcohol is high and the hydroxyl value is 30 or lower. Preferably, the hydroxyl value is 1 to 30, and more preferably 1 to 20. Note that carnauba wax contains free alcohol and resin and has high hydroxyl value of 35 or higher. From this point of view, the wax (a) is desired to be other than carnauba wax.

[Manufacturing method of rice wax]

Rice wax is obtained by wax refining (purification) of coarse wax which is a by-product in purification step of rice bran oil (crude rice oil) which is extracted from rice bran. This coarse wax contains approximately 55 to 65 mass % wax component (ester wax), approximately 20 to 30 mass % free fatty acid and approximately 5 to 15 mass % triglyceride. By removing soft wax composed of free fatty acid and triglyceride from coarse wax, rice wax containing fatty acid alcohol ester, containing saturated straight-chain monocarboxylic acid of carbon number around 22 to 24 and saturated straight-chain alcohol of carbon number around 24 to 38, as the main component is obtained. The main component means that the composition ratio of the saturated straight-chain ester wax in the rice wax composition is high, for example, the content of saturated straight-chain ester in 100 mass parts rice wax may be 60 mass parts or higher and 99 mass parts or lower, and furthermore 75 mass parts or higher and 98 mass parts or lower. Also, rice wax has hydroxyl value of 30 or lower, since the content of polar substances such as resin is low. Method for removing soft wax composed of free fatty acid or triglyceride from coarse wax includes repeating known rice wax purification methods such as obtaining by recrystallization using organic solvent, enhancing esterification during purification, esterification of rice wax by addition of polyhydric alcohol, melting rice wax under heated vacuum, and combining the purification methods and the like to remove or to decrease the free fatty acid and impurities of low-melting point triglycerides and aliphatic hydrocarbons to obtain rice wax. Also, purification method such as stirring a mixture of coarse wax extracted from rice bran and ethanol under keeping the mixture warm and separating wax-containing colloidal particles and soft wax-containing ethanol component, followed by recovery of wax-containing colloidal particles from the colloid-containing liquid may suitably be applied.

[Ester (b)]

There is no limitation in the method for preparing this ester (b) of glycerin with the mixed carboxylic acid composed of straight-chain C12 to C24 monocarboxylic acid having one hydroxyl group and straight-chain C12 to C24 monocarboxylic acid forming the wax composition for toner of the present invention as long as the above described requirement is met. The straight-chain C12 to C24 monocarboxylic acid having one hydroxyl group may be a saturated straight-chain monocarboxylic acid and the straight-chain C12 to C24 monocarboxylic acid may also be a saturated straight-chain monocarboxylic acid. In this manner, the wax composition is less prone to oxidization and thermal stability is improved. Note that at least a part of the straight-chain monocarboxylic acid forming the ester (b) may be unsaturated.

For example, the ester separated by, performing solely a purification processes such as hydrogenation, extraction, distillation, filtration, crystallization, or column chromatography or by combining a plurality of the processes to naturally existing fat and oil such as castor oil may be used as the ester (b). Also, there are preparation methods such as synthesis of esters from raw materials of single-component carboxylic acid and glycerin, followed by blending each of the esters to have the above described carboxylic acid composition or by preparing monocarboxylic acid raw materials beforehand to make the synthesized ester of the above described carboxylic acid composition, then by preparation by esterification. When performing esterification, manufacturing methods, for example, includes methods such as synthesis by oxidation reaction, synthesis from carboxylic acid and its derivative, utilization of dehydration condensation reaction of carboxylic acid compound and alcohol compound, reaction of acid halide and alcohol compound, or ester exchange reaction. When reacting, a catalyst may be used, in which the catalyst includes acidic or alkaline catalyst, for example zinc acetate and titanium compound. When reacting, carboxylic acid raw material and alcohol raw material of the same molecular ratio or by adding one component in excess react. Then, purification may be performed by recrystallization method, distillation method, solvent extraction method, etc.

Straight-chain C12 to C24 monocarboxylic acid having one hydroxyl group may be represented by a chemical formula $CH_3$-$[CH_2]_x$-CHOH-$[CH_2]_y$-COOH (where, x and y in the above-mentioned formula are integer of 0 or larger, satisfying $9 \leq x + y \leq 21$ (that is, x + y = carbon number - 3)), including, for example, hydroxymyristic acid, hydroxypalmitic acid, hydroxystearic acid, hydroxyarachidic acid, hydroxybehenic acid, etc., and among which hydroxystearic acid having carbon number 18 is more preferable. The position of hydroxyl group is not particularly limited, but 12-hydroxystearic acid having the hydroxyl group on 12-position is preferable.

Examples of the straight-chain C12 to C24 monocarboxylic acid may be shown by a chemical formula $CH_3$-$[CH_2]_z$-COOH (where z in the above-mentioned formula is an integer satisfying $10 \leq z \leq 22$, that is, z = (carbon number) - 2), including, for example, lauric acid, myristic acid, palmitic acid, stearic acid, arachic acid, behenic acid, tetracosanoic acid, etc.

The carboxylic acid which is forming the ester (b) is composed of preferably, 60 mass % or higher saturated linear C18 monocarboxylic acid having hydroxyl group, and more preferably saturated linear C18 monocarboxylic acid having hydroxyl group in the range of 65 to 95 mass %. It is preferable that if the content of saturated linear C18 monocarboxylic acid having hydroxyl group is 60 mass % or higher, the releasability of the toner is favorable, and winding and generation of low-temperature offset in printed image is less likely to occur.

It is preferable, that when constituent skeleton of the straight-chain monocarboxylic acid having hydroxyl group and the straight-chain monocarboxylic acid free of hydroxyl group in the ester (b) have a carbon number of 12 or higher, generation of toner particle blocking is prevented even when the toner is stored in an environment at a temperature of approximately 50°C, and when the constituent skeleton have a carbon number of 24 or lower, the releasability of the toner is favorable and winding and generation of low-temperature offset in printed image are prevented. Further, it is preferable that when the constituent skeleton of the straight-chain monocarboxylic acid having hydroxyl group and straight-chain monocarboxylic acid free of hydroxyl group is a straight-chain C14 to C22 monocarboxylic acid, prevention of sheet winding onto the fixing roller and effect of preventing low-temperature offset becomes significant when printing an image.

Acid value of the ester (b) is preferably 3 mg KOH/g or lower, and more preferably 2 mg KOH/g or lower. It is preferable in terms of chargeability and high temperature storage stability, when the acid value of 3 mg KOH/g or lower.

[Wax composition]

The mass ratio of the wax (a) containing the monoester of straight-chain monocarboxylic acid and straight-chain monoalcohol to the ester (b) of glycerin with the mixed carboxylic acid composed of straight-chain C12 to C24 monocarboxylic acid having one hydroxyl group and straight-chain C12 to C24 monocarboxylic acid in the wax composition of the present invention is preferably 1 : 4 to 4 : 1 and more preferably 2 : 3 to 3 : 2. In terms of coloring agent dispersibility and storage stability, it is preferable that the content of the ester (b) of glycerin with the mixed carboxylic acid composed of straight-chain C12 to C24 monocarboxylic acid having one hydroxyl group and straight-chain C12 to C24 monocarboxylic acid is equal to the above described lower limit value or higher. On the other hand, in terms of releasability and volatility resistance, it is preferable that the content of the ester (b) of glycerin with the mixed carboxylic acid composed of straight-chain C12 to C24 monocarboxylic acid having one hydroxyl group and straight-chain C12 to C24 monocarboxylic acid is equal to the above described upper limit value or lower.

Note that one or more kinds of the wax (a) containing the monoester of straight-chain monocarboxylic acid and straight-chain monoalcohol may respectively be blended with one or more kinds of ester (b) of glycerin with the mixed carboxylic acid composed of straight-chain C12 to C24 monocarboxylic acid having one hydroxyl group and straight-chain C12 to C24 monocarboxylic acid.

In this way, the wax composition, obtained by mixing the above described wax (a) containing the monoester of straight-chain monocarboxylic acid and straight-chain monoalcohol and ester (b) of glycerin with the mixed carboxylic acid composed of straight-chain C12 to C24 monocarboxylic acid having one hydroxyl group and straight-chain C12 to C24 monocarboxylic acid in a predetermined ratio as needed, may improve the wax and coloring agent dispersibility in the toner composition. The following is an explanation of a possible mechanism behind this.

The wax containing the monoester of straight-chain monocarboxylic acid and straight-chain monoalcohol has low polarity and highly crystalline nature when used alone and the dispersibility of the wax may decrease and defective printing may occur due to aggregation and crystallization of the wax alone, when solidifying after once being melted. On the other hand, ester (b) of glycerin with the mixed carboxylic acid composed of straight-chain C12 to C24 monocarboxylic acid having one hydroxyl group and straight-chain C12 to C24 monocarboxylic acid has high affinity with the coloring agent which contributes to coloring agent dispersibility in the binder resin due to containing hydroxyl group having high polarity, but has poor wax dispersibility and when blended in the toner alone, releasing defect and degradation of storage stability may occur, although the coloring agent dispersibility improves.

It is inferred that dispersibility of wax or coloring agent in the toner composition will be increased by combining the wax (a) containing the monoester of straight-chain monocarboxylic acid and straight-chain monoalcohol and the ester (b) of glycerin with the mixed carboxylic acid composed of straight-chain C12 to C24 monocarboxylic acid having one hydroxyl group and straight-chain C12 to C24 monocarboxylic acid to cause changes in the crystalline nature, crystallization behavior, or polarity of the wax containing the monoester of straight-chain monocarboxylic acid and straight-chain monoalcohol to enable large improvement in the releasing defect and degradation of storage stability of the ester (b) of glycerin with the mixed carboxylic acid composed of straight-chain C12 to C24 monocarboxylic acid having one hydroxyl group and straight-chain C12 to C24 monocarboxylic acid alone as well as significant improvement in the decrease of dispersibility due to aggregation and crystallization of wax, containing the monoester of straight-chain monocarboxylic acid and straight-chain monoalcohol, alone. Note that even in the presence of many hydroxyl groups, harming of the thermal stability by free alcohol, etc. will not occur since the ester (b) has hydroxyl group in its molecule unlike the wax (a). Rather, the hydroxyl group of the ester (b) contributes to improvement in the dispersibility and the like of the wax composition.

The endothermic curve of the wax composition of the present invention measured with differential scanning calorimeter (DSC) has a maximum endothermic peak with peak top temperature preferably 60°C or higher and 100°C or lower, more preferably 70°C or higher and 90°C or lower. It is preferable that the wax composition used in the present invention has the peak top temperature equal to or higher than the above described lower limit temperature since the crystallization degree of the wax composition in the toner will not decrease and thereby storage stability and developability do not degrade. Also, it is preferable that the peak top temperature is equal to or lower than the above described upper limit temperature since the toner fixing temperature does not increase.

The wax composition used in the present invention comprises the wax (a) containing the monoester of straight-chain monocarboxylic acid and straight-chain monoalcohol and ester (b) of glycerin with the mixed carboxylic acid composed of straight-chain C12 to C24 monocarboxylic acid having one hydroxyl group and straight-chain C12 to C24 monocarboxylic acid and has hydroxyl value of 30 or higher and iodine value of 13 or lower.

The hydroxyl value of the wax composition is 30 mg KOH/g or higher and preferably 160 mg KOH/g or lower, since when the hydroxyl value of the wax composition is too low, the polarity is low and affinity with the coloring agent is low, and coloring agent dispersibility in the binder resin may decrease generating defective printing. Furthermore, the iodine value of the wax composition is 13 or lower, since when the value is too high, winding and low-temperature offset may occur in the printed images due to aggregation of wax alone and decrease in dispersibility. Note that the lower limit value of iodine value is typically 0.01 mg. Furthermore, the preferable acid value of the wax composition is 10 mg KOH/g or lower. When the acid value is 10 mg KOH/g or higher, the polarity becomes low and the dispersibility is likely to degrade; therefore, the preferable acid value is 10 mg KOH/g or lower. The chargeability of the toner containing the wax composition of the present invention becomes all the more better. Note that the lower limit value of the acid value of the wax (a) is typically 0.01 mg KOH/g.

Here, the iodine value of the wax composition is the value measured by a method in compliance with JOCS 2.3.4.1-2013 in the "Standard Methods for the Analysis of Fats, Oils and Related Materials, 2003 Version" by Japan Oil Chemist's Society. Similarly, the acid value may be measured in compliance with JOCS 2.3.1-2013. The hydroxyl value of the wax composition and the wax (a) may be measured in compliance with JOCS 2.3.6.2-2013.

[Manufacturing method of wax composition]

The wax composition used in the present invention may be manufactured by a known method. For example, the composition may be manufactured by manufacturing the wax (a) containing the monoester of straight-chain monocarboxylic acid and straight-chain monoalcohol, followed by mixing the ester (b) of glycerin with the mixed carboxylic acid composed of straight-chain C12 to C24 monocarboxylic acid having one hydroxyl group and straight-chain C12 to C24 monocarboxylic acid and further blending binder resins, etc., that are described later.

In terms of variation in quality, it is preferable to homogeneously mix the wax (a) containing the monoester of straight-chain monocarboxylic acid and straight-chain monoalcohol and the ester (b) of glycerin with the mixed carboxylic acid composed of straight-chain C12 to C24 monocarboxylic acid having one hydroxyl group and straight-chain C12 to C24 monocarboxylic acid under heating to a temperature equal or above the melting point and then perform filtration, cooling, fine granulation, etc.

In this way, high quality images can be achieved with the thus obtained wax composition of the present invention which can give low-temperature fixability to the toner and disperse the coloring agent favorably. Therefore, the present invention can be suitably used as wax composition for toner.

The wax composition of the present invention is blended with binder resin, coloring agent, charge controlling agent, etc. to manufacture the toner by a typical formulation. The amount of formulation (additive amount) of the wax composition for toner of the present invention in the toner is typically 1 to 20 mass parts, preferably, 2 to 20 mass parts, more preferably 8 to 20 mass parts, particularly preferably 12 to 20 mass parts, per 100 weight parts the whole toner. When the lower limit value is in the above described range, excellent toner heat storage stability can be successfully exhibited and when the upper limit value is in the above described range, low-temperature fixability of the toner can be successfully exhibited. The wax composition of the present invention has excellent dispersibility in toner, and therefore can be present in the toner without being aggregated even on increase of the additive amount. The wax composition for toner of the present invention is blended in the toner, solely or in a mixture of 2 kinds or more. The method to check whether the toner contains the wax composition is not particularly limited, but, for example, a method in which the toner is stirred with an organic solvent which selectively melts the wax component in the toner may be used. By drying the extract liquid obtained by stirring, white solid (wax) is obtained in the residue.

The extract is measured by, for example, using infrared spectrometer (FT-IR), differential scanning calorimeter (DSC), thermal decomposition (GC/MS) apparatus. Respective structures of the wax (a) and the ester (b) may be specified by comparison with the reference peaks of hydroxyl groups for various kinds of waxes and esters (b). Further, mass ratio of the wax (a) and the ester (b) can be calculated by quantitative analysis of the peak of higher alcohol forming the ester in the wax (a) and the peak of the carboxylic acid having hydroxyl group forming the ester (b).

Note that specific examples of binder resin, coloring agent and charge controlling agent are as follows and known materials can be used as appropriate.

(Binder resin)

Examples for binder resin includes polyester type resin, styrene-(meth)acrylic acid type copolymer resin, thermoplastic elastomer, styrenic resin, (meth)acrylic acid type resin, olefinic resin (for example, $\alpha$-olefin resins such as polyethylene, polypropylene, etc.), vinyl type resins (for example, polyvinyl chloride, polyvinylidene chloride, etc.), polyamide type resin, polyether type resin, urethane type resin, epoxy type resin, polyphenylene oxide type resin, terpene phenol resin, polylactic acid resin, hydrogenated rosin, cyclized rubber and cycloolefin copolymer resin, etc. These may be used alone or in combinations of two or more kinds. Among these, polyester type resin and styrene-(meth)acrylic acid type copolymer resin are preferable in terms of being able to satisfy the requirements such as image quality characteristics, durability and productivity of the toner in a good balance.

(Coloring agent)

Coloring agent may be pigment for black, pigment for magenta, pigment for cyan, pigment for yellow or pigment for other colors. As for pigment for black, carbon black such as lamp black, thermal black, acetylene black, channel black, or furnace black, nigrosine dyes, etc.; as pigment for magenta, rose bengal, Dupont Oil Red, C.I. Pigment Red 1, 2, 3, 4, 5, 6, 7, 8, 9, 10, 11, 12, 13, 14, 15, 16, 17, 18, 19, 21, 22, 23, 30, 31, 32, 37, 38, 39, 40, 41, 48, 49, 50, 51, 52, 53, 54, 55, 57, 58, 60, 63, 64, 68, 81, 83, 87, 88, 89, 90, 112, 114, 122, 123, 163, 202, 206, 207, 209; C.I. Pigment Violet 19; C.I. Violet 1, 2, 10, 13, 15, 23, 29, 35, etc.; as for pigment for cyan, aniline blue, calco oil blue, ultramarine blue, methylene blue chloride, phthalocyanine blue, C.I. Pigment Blue 2, 3, 15, 16, 17; C.I. Vat Blue 6; C.I. Acid Blue 45, etc.; and as for pigment for yellow, chrome yellow, quinoline yellow, C.I. Pigment Yellow 1, 2, 3, 4, 5, 6, 7, 10, 11, 12, 13, 14, 15, 16, 17, 23, 65, 73, 74, 83, 93, 97, 128, 155, 180 are used alone or as a mixture. Preferable coloring agent for full-color use for its especially good color mixing ability and excellent color reproducibility includes C.I. Pigment Red 57, 122 for magenta, C.I. Pigment Blue 15 for cyan and C.I. Pigment Yellow 17, 93, 155, 180 for yellow, etc.

(Charge controlling agent)

Examples for the charge controlling agent having positive chargeability include for example, nigrosine and modified products such as fatty acid metal salts; quaternary ammonium salts such as tributylbenzylammonium-1-hydroxy-4-naphthosulfonate, and tetrabutylammonium tetrafluoroborate; diorganotin oxides such as dibutyltin oxide, dioctyltin oxide, dicyclohexyltin oxide; diorganotin borates such as dibutyltin borate, dioctyltin borate, dicyclohexyltin borate; pyridium salts, azines, triphenylmethane type compounds, low molecular weight polymers having cationic functional group, etc. These charge controlling agents having positive chargeability may be used alone or in combinations of two or more kinds. Among these charge controlling agents having positive chargeability, nigrosine type compound and quaternary ammonium salt are used preferably. The charge controlling agent having negative chargeability include, for example, organometallic compounds such as acetylacetone metal complex, monoazo metal complex, metal complex or salt of naphthoic acid or salicylic acid type, chelate compounds, low molecular weight polymers having anionic functional group, etc.

These charge controlling agents having negative chargeability may be used alone or in combinations of two or more kinds. Among these charge controlling agents having negative chargeability, salicylic acid type metal complex and monoazo metal complex are preferably used. The content of charge controlling agent is typically in the range of 0.1 to 5.0 weight parts, and preferably 0.5 to 3.0 weight parts per 100 weight parts binder resin.

[EXAMPLES]

The present invention is further described specifically by showing below, example manufacture of wax compositions for toners of the present invention and method for evaluation thereof.

[Wax composition for toner]

Wax compositions for toners (C-1) to (C-5) and wax compositions for comparison are prepared according to the following formulation and the coloring agent dispersibility of the obtained wax compositions are shown in Table 1. Note that, (C-1) to (C-5) correspond to Examples 1 to 5.

[Preparation of wax composition for toner (C-1)]

Rice wax (90 % linear monoester content) 480 g and hydrogenated castor oil 120 g [(a) : (b) = 4 :1] were collected in a four neck flask attached with a thermometer, a nitrogen feeding pipe, stirring impeller and a cooling tube thereto and melted by heating at 100°C under nitrogen to stir under heating for 30 minutes to make the content homogeneous. This mixture was solidified by being allowed to cool at room temperature to obtain the wax composition (C-1). The hydroxyl value of the rice wax was 8.

Note that, gas chromatographic measurement was performed using a gas chromatograph (GC-2025 manufactured by Shimadzu Science) and a column (DB-1 HT manufactured by Agilent) to measure the content of the linear monoester by raising the temperature from 150°C to 370°C (5°C /minute) under a vaporization chamber condition of 380°C and holding 10 minutes and by calculating the ratio of the peak area of the linear monoester to the total peak area. Measurements were performed by a similar method for C-2 to C-4 and D-1 to D-5, below.

[Wax composition for toner (C-2)]

The wax composition for toner (C-2) was obtained by a similar method to that for (C-1) except for adjusting the mass ratio of the rice wax : hydrogenated castor oil to 1 : 1 [(a) : (b) = 1 : 1]. The hydroxyl value of the rice wax in the wax composition was 8.

[Wax composition for toner (C-3)]

The wax composition for toner (C-3) was obtained by a similar method to that for (C-1) except for adjusting the mass ratio of the rice wax : hydrogenated castor oil to 1 : 4 [(a) : (b) = 1 : 4]. The hydroxyl value of the rice wax in the wax composition was 8.

[Wax composition for toner (C-4)]

The wax composition for toner (C-4) was obtained by a similar method to that for (C-2) except for using a rice wax having hydroxyl value 25 and straight-chain monoester content 78 %.

[Wax composition for comparative examples 1 to 5]

For the wax compositions for toners (D-1 to D-5), the wax compositions for toners were obtained by a similar method to that for (C-1) except for the following modifications. Note that, (D-1) to (D-5) correspond to comparative examples 1 to 5.

[Preparation of wax composition (D-1)]

In (D-1), polyethylene wax (Mitsui Hi-Wax 320 P manufactured by Mitsui Chemicals) was used in place of hydrogenated castor oil of (C-1). The hydroxyl value of the rice wax in the wax composition was 8.

[Preparation of wax composition (D-2)]

In (D-2), hydrogenated castor oil was not used and rice wax alone was used. The hydroxyl value of the rice wax in the wax composition was 8.

[Preparation of wax composition (D-3)]

In (D-3), monocarboxylic acid alone was used in place of hydrogenated castor oil of (C-3). The hydroxyl value of the rice wax in the wax composition was 8.

[Preparation of wax composition (D-4)]

In (D-4), rice wax was not used and hydrogenated castor oil alone was used.

[Preparation of wax composition (D-5)]

In (D-5), carnauba wax was used in place of rice wax of (C-2). The hydroxyl value of the ester wax in the wax composition was 38.

[Evaluation method of wax composition]

Acid value, iodine value and hydroxyl value were evaluated for wax compositions (C-1) to (C-5) and (D-1) to (D-5) by the following method. (1) Acid value of wax composition; in compliance with JOCS (Japan Oil Chemist's Society) 2.3.1-2013.

(2) Iodine value of wax composition; in compliance with JOCS (Japan Oil Chemist's Society) 2.3.1-2013.
(3) Hydroxyl value of wax composition and wax (a); in compliance with JOCS (Japan Oil Chemist's Society) 2.3.6.2-2013.
(4) Heat characteristics of the wax composition

Heat characteristic of wax compositions (C-1) to (C-4) and (D-1) to (D-5) was evaluated. "DSC-50" manufactured by Shimadzu Science was used for measurement of heat characteristics of the wax composition. The measurement was performed by respectively placing about 20 mg wax compositions C-1 to C-3 and D-1 to D-3 in sample holders made from aluminum to verify the heat characteristics on raising the temperature from room temperature to 120°C at 5°C /minute, cooling again to 0°C at -5°C /minute and raising the temperature again to 120°C at 5°C /minute under nitrogen atmosphere (200 mL/minute) using alumina as reference material. The results thereof are shown in Tables 2 to 3 that are described later.

[Evaluation of coloring agent dispersibility using wax composition]

[Example 1]

In example 1, wax composition according to (C-1) was sufficiently mixed respectively with resin (polyester), coloring agent (Pigment Red), charge controlling agent (low molecular weight polymer having cationic functional group), etc., with a mixing apparatus and then heat kneaded at a temperature of 130 to 140°C with a biaxial melt extrusion kneader. The disperse state of the kneaded mixture was evaluated. After kneading, the mixture was cooled, roughly milled with a cutter milling machine, finely milled with a jet mill and classified to obtain toners of each color tone. Note that, the additive amount (content) of the wax compositions in the toners was 10 mass %.

Also, the cross-section of a part of the kneaded mixture was observed using an optical microscope to evaluate the dispersibility of the coloring agent and the releasing agent. Specifically, the domain diameter of the largest aggregate of the coloring agent was measured to evaluate the dispersibility of the coloring agent and the wax by the measured domain diameter, ∘ when smaller than 3 μm, Δ when 3 μm or larger and smaller than 6 μm and × when 6 μm or larger. Also, the domain diameter of the largest aggregate of the coloring agent was measured to evaluate the dispersibility of the releasing agent by the measured domain diameter, ∘ when lower than 5 μm, Δ when 5 μm or higher and lower than 10 μm and × when 10 μm or higher.

∘: The coloring agent particles are homogeneously dispersed without aggregation.
Δ: Slight aggregation is observed.
×: Voids are observed due to the aggregation.

[Heat storage stability]

Degree of aggregation of the toners containing wax compositions according to the examples and comparative examples were measured by the following method to evaluate the heat storage stability of the toner. In detail, a 20 g of the toner was put in a plastic container of volume 200 mL, let stand still in a thermo-hygrostat ("PH-3 KT" manufactured by Espec Corp.) set to 50°C for 48 hours and taken out therefrom. Then, three kinds of sieves with openings 150 μm, 75 μm and 45 μm were attached in this order to a powder tester (PT-S manufactured by Hosokawa Micron Corporation). A 2 g of the toner was fed on the sieve of opening 150 μm for evaluating the heat storage stability. The toner for evaluation of the heat storage stability was sieved under the conditions of rheostat scale 2 and 10-seconds period. The mass of the remaining oversized toner was measured. The degree of aggregation of the toner (mass %) was calculated from the measured mass of the toner according to the following equations.

The toner having degree of aggregation of lower than 20 mass % was evaluated to be a toner having excellent heat storage stability.

$$\text{Degree of aggregation (mass \%)} = a + b + c$$

$$a = (\text{weight of the oversized toner remaining on sieve of opening } 150 \ \mu m/2) \times 100$$

$$b = (\text{weight of the oversized toner remaining on sieve of opening } 75 \ \mu m/2) \times 100 \times (3/5)$$

$$c = (\text{weight of the oversized toner remaining on sieve of opening } 45 \ \mu m/2) \times 100 \times (1/5)$$

[Low-temperature fixability]

Toners obtained in the examples and comparative examples were the measurement targets and unfixed image of the toner image on a transfer sheet was fixed by setting the temperature of the heat fixing roller of a commercially available duplicating machine (trade name; EP-870 Z, , manufactured by Minolta) to 120°C. Moreover, rubbing was performed on the formed fixed image with a cotton pad to obtain an index of low-energy fixability by calculating a fixing strength by the following equation. The low-temperature fixability was evaluated to be ∞, ∘, Δ and ×, when the fixing strength was 80% or higher, 70% or higher and lower than 80 %, 60 % or higher and lower than 70 %, and lower than 60%, respectively, in which the fixing strength = (image density of the fixed image after rubbing/image density of the fixed image before rubbing) × 100 (%).

[Examples 2 to 5]

The toners were obtained by a similar method to Example 1 except for using the wax compositions according to (C-2) to (C-4) in place of (C-1). However, in Example 5, a styrene-acrylic acid type copolymer was used in place of polyester. The dispersibility, heat storage stability and low-temperature fixability were evaluated for Examples 2 to 5, similar to Example 1.

[Comparative examples 1 to 5]

Toners were obtained by a similar method to Example 1 except for using wax compositions according to (D-1) to (D-5) in place of (C-1). The dispersibility, heat storage stability and low-temperature fixability were evaluated in comparative examples 1 to 5, similar to Example 1. The evaluation results for Examples 1 to 5 and comparative examples 1 to 5 are shown in Table 1.

Table 1

| | Wax composition for toner | Physical properties | | | Evaluation | | | |
|---|---|---|---|---|---|---|---|---|
| | | Iodine value | Hydroxyl value | Acid value | Dispersibility | | Heat storage stability | Low-temperature fixability |
| | | | | | Wax | Coloring agent | | |
| Example 1 | C-1 | 8.9 | 40.2 | 3.0 | ○ | ○ | ○ | ○ |
| Example 2 | C-2 | 6.4 | 88.6 | 2.6 | ○ | ○ | ○ | ○○ |
| Example 3 | C-3 | 5.6 | 129.5 | 2.0 | ○ | ○ | ○ | △ |
| Example 4 | C-4 | 8.4 | 91.5 | 2.6 | ○ | ○ | ○ | △ |
| Example 5 | C-2 | 6.4 | 88.6 | 2.6 | ○ | ○ | ○ | ○○ |
| Comparative example 1 | D-1 | 3.4 | 4.8 | 3.5 | × | × | × | × |
| Comparative example 2 | D-2 | 8.3 | 9.5 | 2.7 | × | × | × | × |
| Comparative example 3 | D-3 | 5.1 | 5.6 | 99.4 | ○ | ○ | × | × |
| Comparative example 4 | D-4 | 2.3 | 158.0 | 1.4 | × | △ | × | △ |
| Comparative example 5 | D-5 | 11.8 | 98.0 | 4.9 | △ | × | × | × |

Table 2

Table 3

As shown in Table 1, all the wax compositions (C-1) to (C-4) in the Examples 1 to 5 showed excellent coloring agent dispersibility due to low acid value and high hydroxyl value which increased the affinity of the hydroxyl group having high polarity and the coloring agent.

Tables 2 to 3 show the endothermic curves in differential scanning calorimeter (DSC) of wax compositions (C-1) to (C-4) and (D-1) to (D-5). According to the result in Table 2, by decreasing the crystalline nature of the wax, excellent dispersibility was shown and further endothermic peaks in the range of 60 to 100°C were shown resulting in excellent low-temperature fixability. Use of these compositions as the wax for toner can contribute to higher image quality by high dispersion of the coloring agent in the binder resin.

According to Tables 1 to 3, comparative examples 1 to 2 showed significantly low acid values and sharper endothermic peaks and resulted in low wax dispersibility and low coloring agent dispersibility due to aggregation and crystallization of the wax alone when solidifying after once being melted. Also, in the comparative example 3, the toner composition had high polarity due to high acid value despite the low hydroxyl value, and the result showed an excellent dispersibility but poor heat storage stability. In comparative example 4, the dispersibility of the wax degraded because hydrogenated castor oil was used alone and contained no rice wax. In comparative example 5, carnauba wax was used in place of rice wax. Although the hydroxyl value of the wax composition was close to the value in Example 4, the dispersibility was poor because carnauba wax further contains a large amount of resin, etc., and has low content of linear monoester.

From the results in Table 1 to 3, it can be seen that the toner of the present invention has excellent coloring agent dispersibility and excellent low-temperature fixability and also has excellent heat storage stability and excellent printing characteristics.

[INDUSTRIAL APPLICABILITY]

The present invention provides waxes having excellent coloring agent dispersibility, high transparency, high-quality image characteristics and excellent heat storage stability and toners using the waxes.

**Claims**

1. An electrophotographic toner comprising a wax composition:

   wherein a hydroxyl value of the wax composition is 30 or higher and an iodine value of the wax composition is 13 or lower,
   wherein the wax composition comprises:

   a wax (a) containing a monoester of a straight-chain monocarboxylic acid and a straight-chain monoalcohol; and
   an ester (b) of glycerin with a mixed carboxylic acid composed of a straight-chain C12 to C24 monocarboxylic acid having one hydroxyl group and a straight-chain C12 to C24 monocarboxylic acid,
   wherein the wax (a) containing the monoester of the straight-chain monocarboxylic acid and the straight-chain monoalcohol has hydroxyl value of 30 or lower.

2. The electrophotographic toner according to claim 1,

   wherein the monoester of the straight-chain monocarboxylic acid and the straight-chain monoalcohol, and the straight-chain monocarboxylic acid has carbon number of 20 to 24 and the straight-chain monoalcohol has carbon number of 22 to 38.

3. The electrophotographic toner according to claim 1 or 2, wherein the wax (a) and the ester (b) are contained in a mass ratio of 1 : 4 to 4 : 1.

4. The electrophotographic toner according to any one of claims 1 to 3,

   wherein the monoester of straight-chain monocarboxylic acid and straight-chain monoalcohol is a monoester of a saturated straight-chain monocarboxylic acid and a saturated straight-chain alcohol,
   wherein the mixed carboxylic acid is a mixed carboxylic acid composed of a saturated straight-chain C12 to C24 monocarboxylic acid having one hydroxyl group and a saturated straight-chain C12 to C24 monocarboxylic acid.

5. The electrophotographic toner according to any one of claims 1 to 4, wherein the wax (a) contains linear monoester of 60 weight % or higher.

6. The electrophotographic toner according to any one of claims 1 to 5, wherein an additive amount of the wax composition is 2 to 20 mass %.

**Patentansprüche**

1. Elektrophotographischer Toner, umfassend eine Wachszusammensetzung:

   wobei ein Hydroxylwert der Wachszusammensetzung 30 oder höher und ein Jodwert der Wachszusammensetzung 13 oder niedriger ist,
   wobei die Wachszusammensetzung umfasst:

   ein Wachs (a), das einen Monoester einer geradkettigen Monocarbonsäure und einen geradkettigen Monoalkohol enthält; und
   einen Ester (b) aus Glycerin mit einer gemischten Carbonsäure, die aus einer geradkettigen C12- bis C24-Monocarbonsäure mit einer Hydroxylgruppe und einer geradkettigen C12- bis C24-Monocarbonsäure zusammengesetzt ist,
   wobei das Wachs (a), das den Monoester der geradkettigen Monocarbonsäure und den geradkettigen Monoalkohol enthält, einen Hydroxylwert von 30 oder weniger aufweist.

2. Elektrophotographischer Toner nach Anspruch 1,

   wobei der Monoester der geradkettigen Monocarbonsäure und des geradkettigen Monoalkohols, und
   die geradkettige Monocarbonsäure einen Kohlenstoffwert von 20 bis 24 aufweist und der geradkettige Monoalkohol einen Kohlenstoffwert von 22 bis 38 aufweist.

3. Elektrophotographischer Toner nach Anspruch 1 oder 2, **dadurch gekennzeichnet, dass** das Wachs (a) und der Ester (b) in einem Massenverhältnis von 1:4 bis 4:1 enthalten sind.

4. Elektrophotographischer Toner nach einem der Ansprüche 1 bis 3,

   wobei der Monoester aus geradkettiger Monocarbonsäure und geradkettigem Monoalkohol ein Monoester aus einer gesättigten geradkettigen Monocarbonsäure und einem gesättigten geradkettigen Alkohol ist,
   wobei die gemischte Carbonsäure eine gemischte Carbonsäure ist, die aus einer gesättigten geradkettigen C12- bis C24-Monocarbonsäure mit einer Hydroxylgruppe und einer gesättigten geradkettigen C12- bis C24-Monocarbonsäure besteht.

5. Elektrophotographischer Toner nach einem der Ansprüche 1 bis 4, wobei das Wachs (a) einen linearen Monoester von 60 Gew.-% oder mehr enthält.

6. Elektrophotographischer Toner nach einem der Ansprüche 1 bis 5, wobei die zugesetzte Menge der Wachszusammensetzung 2 bis 20 Massenprozent beträgt.

**Revendications**

1. Toner électro-photographique comprenant une composition de cire :

   dans lequel un indice d'hydroxyle de la composition de cire est de 30 ou plus et un indice d'iode de la composition de cire est de 13 ou moins,
   dans lequel la composition de cire comprend :

   une cire (a) qui contient un mono-ester d'un acide mono-carboxylique en chaîne droite et d'un mono-alcool en chaîne droite ; et
   un ester (b) de glycérine avec un acide carboxylique mélangé qui se compose d'un acide mono-carboxylique C12 à C24 en chaîne droite qui comporte un seul groupe hydroxyle et un acide mono-carboxylique C12 à C24 en chaîne droite, et
   dans lequel la cire (a) qui contient le mono-ester de l'acide mono-carboxylique en chaîne droite et du mono-alcool en chaîne droite présente un indice d'hydroxyle de 30 ou moins.

2. Toner électro-photographique selon la revendication 1,

dans lequel le mono-ester de l'acide mono-carboxylique en chaîne droite et du mono-alcool en chaîne droite, et l'acide mono-carboxylique en chaîne droite comporte un nombre de carbones de 20 à 24 et le mono-alcool en chaîne droite comporte un nombre de carbones de 22 à 38.

3. Toner électro-photographique selon la revendication 1 ou 2, dans lequel la cire (a) et l'ester (b) sont contenus selon un rapport massique de 1 : 4 à 4 : 1.

4. Toner électro-photographique selon l'une quelconque des revendications 1 à 3,

dans lequel le mono-ester d'acide mono-carboxylique en chaîne droite et de mono-alcool en chaîne droite est un mono-ester d'un acide mono-carboxylique en chaîne droite saturé et d'un alcool en chaîne droite saturé, et dans lequel l'acide carboxylique mélangé est un acide carboxylique mélangé qui comprend un acide mono-carboxylique C12 à C24 en chaîne droite saturé qui comporte un seul groupe hydroxyle et un acide mono-carboxylique C12 à C24 en chaîne droite saturé.

5. Toner électro-photographique selon l'une quelconque des revendications 1 à 4, dans lequel la cire (a) contient du mono-ester linéaire à raison de 60 % en poids ou plus.

6. Toner électro-photographique selon l'une quelconque des revendications 1 à 5, dans lequel une quantité d'additif de la composition de cire est comprise entre 2 et 20 % en masse.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H4362953 B
- JP 2013015673 A
- JP 2004287218 A
- EP 2415459 A1
- JP 2015004962 A
- JP 2016145857 A

**Non-patent literature cited in the description**

- Standard Methods for the Analysis of Fats, Oils and Related Materials. JOCS 2.3.4.1-2013. Japan Oil Chemist's Society, 2003